# EUROPÄISCHE PATENTSCHRIFT

(11) **EP 1 151 972 B1**
(45) Veröffentlichungstag und Bekanntmachung des Hinweises auf die Patenterteilung: **29.10.2003**
(21) Anmeldenummer: 00109668.4
(22) Anmeldetag: 06.05.2000
(51) Int. Cl.: C04B 26/02, C04B 18/24

(54) **Verfahren zur Herstellung von Polymerbeton und Polymerbeton als solcher**
Process for producing polymer concrete and polymer concrete as such
Procédé de preparation du béton polymère et béton polymère même

(43) Veröffentlichungstag der Anmeldung: 07.11.2001
(73) Patentinhaber: Foundation for Development Aid ACP-EEC ASBL, 9991 Weiswampach (LU)
(72) Erfinder: Foundation for Development Aid ACP-EEC ASBL, 9991 Weiswampach (LU)
(74) Vertreter: Grünecker, Kinkeldey, Stockmair & Schwanhäusser Anwaltssozietät

(56) Entgegenhaltungen:
- CH-A- 672 808
- DE-A- 3 902 023
- DE-A- 19 811 805
- US-A- 4 730 012
- US-A- 6 034 155

## Beschreibung

Die Erfindung bezieht sich auf das technische Gebiet der Chemie und betrifft somit ein Verfahren zur Herstellung von mit Reaktionsharzen und mit Fasern versehenen Mineralmischungen, insbesondere Betonmischungen, wobei diese Füllstoffe besonders darauf ausgerichtet sind; sich eigenschaftsverbessernd in der Mineral- bzw. Betonmischung auszuwirken.

Die zur Polymerbetonherstellung verwendeten Reaktionsharze sind nach DIN16945 flüssige oder verflüssigbare Harze, welche als Monomere, als Prepolymere oder als Polymer-Monomer-Gemische zum Einsatz kommen, und die in Verbindung mit Reaktionsmitteln, wie Härter und/oder Beschleuniger, ohne Abspaltung flüchtiger Komponenten durch Polymerisation oder Polyaddition drucklos oder mit Niederdruckverfahren chemisch aushärten. Am meisten verwendete Hauptgruppen sind die Methylmethacrylate (MMA), ungesättigte Polyester (UP), Phenacrylatharze (PHA), Epoxidharze (EP), Isocyanatharze (PUR-Vorprodukte) und "Hybrid"-Prepolymere aus mehreren der vorgenannten Gruppen. Maßgeblich für die Eigenschaften der jeweiligen Mischungen und damit der daraus herzustellenden Produkte sind neben der den zulässigen Verarbeitungszeitraum von 5 - 200 Minuten seit der Mischungsherstellung beschreibenden "Topfzeit" die mit einem drastischen Temperaturanstieg in der Mischung verbundene einsetzende Hauptreaktion einschließlich der damit gekoppelten Härtung bis zu einer Gesamtzeit ≤ 24 h und die nach Erreichung einer stabilen Fertiggutendtemperatur von ≈ 20°C mit einem Zeitbedarf von bis zu 2 Wochen stattfindende Nachhärtung. Die vorgenannten Reaktionsharze mit ihren wichtigsten Vertretern wie Epoxidharze (EP), ungesättigte Polyester (UP) und Methylmethacrylate (MMA) sind vergleichsweise teuer und haben meist sehr kurze Topfzeiten, d.h. nur die Verarbeitbarkeit in stationären Anlagen für eine meist schwer- oder unveränderliche Gesamttechnologie kommt in Frage. Die o.g. Harze werden zur Herstellung von Reaktionsharz- oder Polymerbeton (6 -12 Masse-% Bindemittel) für hohe mechanische und korrosive Beanspruchung zusammen mit mineralischen Zuschlagstoffen üblicher Körnung eingesetzt. Viele verwendete Reaktionsharze führen in der Abbindephase zu Temperaturanstiegen bis auf Werte ≤ 150 °C. Daraus erwächst die Notwendigkeit, alle (mineralischen) Zuschlagstoffe im Interesse der Gewährleistung der Festigkeitseigenschaften sehr sorgfältig (bis auf Wassergehalte ≈ 0 %) zu trocknen und den Eintrag von H₂O In das Reaktionsharz-Zuschlagstoff-Gemisch weitestgehend zu vermeiden. Ansonsten ist durch die Entstehung anteiliger Wasserdampfmengen mit der Bildung festigkeitsreduzierender Poren oder Blasen im Polymerbetongefüge als nachteilige Wirkung zu rechnen. Zum Beispiel werden damit entsprechend der obigen Bedingungen in stationären Anlagen mechanisch hoch zu belastende und gegen die saure Bestandteile im Abwasser beständige unterirdisch zu verlegende Kanalisationsbauelemente hergestellt, die nach Aushärtung zwar eine mehr als doppelt so hohe Druckbelastbarkeit und eine bis zu 5-fach höhere Biegebelastbarkeit gegenüber vergleichbaren Erzeugnissen aus zementgebundenem Beton erreichen. Andererseits ist der hohe Preis sowohl der eingesetzten Reaktionsharze als auch der gelegentlich verwendeten Faserverstärkungen ebenso wie die bei der o.g. Extremtrocknung der mineralischen Zuschlagstoffe anfallenden Vorbehandlungskosten ein den Einsatz von Polymerbetonerzeugnissen stark beeinflussender Nachteil.

Daneben zeigt die DE 198 11 805 A1 Dämmelemente aus pflanzlichen Materialien. Die hierzu als Bindemittel verwendeten Silikate härten jedoch nicht in Anwesenheit von Wasser aus.

Der Erfindung liegt die Aufgabe zugrunde, ein kostengünstiges Verfahren zur Herstellung von faserverstärktem Polymerbeton und einen solchen Polymerbeton zu schaffen, bei dem eine Bildung von Wasserdampf nicht erfogt bzw. bei dem eine weitgehende Austreibung des in den mineralischen und sonstigen Zusatzstoffen enthaltenden Wassers entfallen kann und bei dem wasserlösliche aber in Anwesenheit von Wasser aushärtende Polymere eingesetzt werden können.

Erfindungsgemäß wird diese Aufgabe dadurch gelöst, daß wasserlösliche aber in Anwesenheit von Wasser aushärtende Reaktionsharze als Bindemittel und hochfeste organische Fasern aus nachwachsenden faserhaltigen Rohstoffen als biege- und/oder zugkraftübertragende Verstärkungen in der Polymerbetonmatrix in mehreren Verfahrensschritten eingesetzt werden. Hierbei können die in Anwesenheit von Wasser aushärtenden Reaktionsharze beispielsweise sein Polymersilikate, Polyvinylether oder Polyvinylpyrolidone in reiner oder modifizierter Form oder in handelsüblichen Dispersionen mit unterschiedlicher Feinheit in Wasser, Als hochfeste organische Fasern aus nachwachsenden faserhaltigen Rohstoffen sind vorzugsweise Bambusfasern ggf. mit mehr oder weniger grobfasrigen Bambusfaserpartikeln und mit Faserdurchmessern von d_{Faser} ≥ 0,5 mm und Faserlängen im Bereich von 4-6 mm ≤ I_{Faser} ≤ 50∼60 mm vorgesehen. Verfahrensgemäß wird so vorgegangen, daß beim Einsatz der organischen Fasern aus nachwachsenden faserhaltigen Rohstoffen die gröbsten und feinsten mineralischen Bestandteile zusammen mit den Bambusfasern zuerst aufgegeben, eine je nach Fasergehalt im Bereich von 30 Sekunden bis 5 Minuten zu variierende Vormischzeit abgearbeitet und danach die mittleren Körnungen der mineralischen Bestandteile zugeführt sowie erneut mit einer Nachmischzeit ≤ 3 Minuten gemischt werden und daß mit der Mengendosierung aller Zuschlagstoffkomponenten in einen an sich bekannten Zwangsmischer die gleichzeitige Ermittlung der jeweiligen Wassergehalte verbunden ist Anschließend erfolgt die Zugabe der pumpfähigen Bindemittelkomponente/n, z. B. in Gestalt von in den Mischer während des weiteren Mischprozesses eingesprühten Tropfen. Die Zeitdauer für das Fertigmischen ist in Abhängigkeit des Fasergehaltes und der sich einstellenden Gesamtfeuchte im Bereich von ≤ 10 Minuten einzustellen.
Der zur stationären Fertigung beliebig geformter Formteile hergestellte Polymerbeton ist i.d.R. so eingestellt, daß der Anteil der Fasern mit Abmessungen entsprechend der Elementarbambusfaserzellen mit dem Längen-Durchmesser-Verhältnis ≈ 100 bei d_{Äqu.} ≤ 10 ∼ 20 µm und der Faserlänge I_{Faser} ≤ 2 mm mindestens 50 % der gesamten zugegebenen Fasermenge beträgt und daß die mineralische Grobkornkomponente Werte zwischen 25 und 50 % des Mineralanteils aufweist. Hierbei steht d_{Äqu.} für einen gleichwertigen Durchmesser für einen i.d.R. nur im Ausnahmefall kreisrunden/kreisförmigen Querschnitt der verwendeten Faser bzw. Faserbündel.
Polymerbeton zur Vorort-Herstellung von mit Schalungshilfe einzubauenden vor allem festigkeitsgebenden Schutzschichten und/oder Auskleidungen ist i.d.R. so eingestellt, daß mindestens 50 % des Faseranteils Fasern darstellen, die lange, kräftige Fasern bei d_{Äqu.} ≥ 0,5 - 1,0 mm und I_{Faser} ≥ 10 mm sind und hierbei die mineralische Grobkornkomponente maximal ein Viertel des Mineralanteils nicht überschreitet.
Es wurde überraschenderweise gefunden, daß die für den Einsatz als biege- und/oder zugkraftübertragende Verstärkungen vorgeschlagenen organischen Fasern aus nachwachsenden Rohstoffen, vorzugsweise als grobfasrige Bambusfaserpartikel mit d_{Faser} ≥ 0,5 mm und Längen im Bereich 4-6 mm ≤ I_{Faser} ≤ 50-60 mm durchaus auch als solche wirken können; sie werden gemäß EP 0 971 065 durch eine den extrem belastbaren Bambushalm mit seinem Faserzelienanteil ≤ 50 % überwiegend spaltende Aufbereitung so hergestellt, daß entsprechend den vorstehenden geometrischen Kriterien mindestens 100-150 einzelne Faserzellen im praktisch einzubebauenden Faserbündelquerschnitt anzutreffen sind und daß je nach Faserbündellänge im Bereich von 25-50 einzelne Faserzellen aneinander gereiht sind. In vorteilhafter Weise sieht die erfindungsgemäße Lösung vor, daß die nach der herkömmlichen Polymerbetonherstellungstechnologie erforderliche weitgehende Austreibung des in den mineralischen und sonstigen Zuschlagstoffen enthaltenen Wassers entfallen kann und durch Einsatz von wasserlöslichen, aber in Anwesenheit von Wasser aushärtenden Polymeren kompensiert wird, gleichzeitig auch den Einsatz von in unterschiedlichem Maße Wasser enthaltende Verstärkungsfasern in Form der organischen Fasern aus nachwachsenden Rohstoffen mit den dazu verträglichen und letztlich passenden/kompatiblen wasserverträglichen Reaktionsharzen zu ermöglichen. Dadurch wird die Polymerbetonherstellung infolge erheblicher Vereinfachungen der Zuschlagstoffvorbehandlung anlagen- und kostenseitig entlastet. Gleichzeitig wird durch die in der Regel über eine Dosierschnecke erfolgende Zumischung und das anschließende Einarbeiten von hochfesten organischen Fasern aus nachwachsenden Rohstoffen, vorzugsweise als grobfasrige Bambusfaserpartikel mit d_{Faser} ≥ 0,5 mm und Längen im Bereich 4-6 mm ≤ I_{Faser} ≤ 50-60 mm, eine kraft- und formschlüssige Einbindung in der Polymerbetonmatrix und damit eine bis an die Biege- und Zugbelastbarkeit des Fasermaterials heranreichende Erhöhung der mechanischen Belastbarkeit des Faser-Polymerbeton-Verbundes erreicht. Bei der erfindungsgemäßen Lösung verfolgt man das Ziel, weitgehend unabhängig von der Oberflächenrestfeuchte der Bambusfasern und der mineralischen Zuschlagstoffe zu sein, um deren kraft- und formschlüssige Einbindung in den Gesamtverbund nicht zu beeinträchtigen. Da die o.g. und vorgeschlagenen Substanzen als gesundheitlich unbedenklich und hautverträglich gelten, was von den gegenwärtig verwendeten Reaktionsharzen nur mit Einschränkungen zu behaupten ist, bietet die erfindungsgemäße Lösung damit weitere vorteilhafte Wirkungen an.

An nachfolgenden, ausgewählten Ausführungsbeispielen soll die Erfindung näher erläutert werden, wobei sich auch dem Fachmann zeigt, daß es möglich ist, Wasser enthaltende Materialien als Verstärkungs- und/oder Zuschlagstoffe sowie vorgenannte Reaktionsharze gemeinsam mit Fasermaterial aus nachwachsenden Rohstoffen zu Polymerbeton mit sehr hohen Festigkeitseigenschaften zu verarbeiten.

### Beispiel 1: Herstellung von Polymer-Bambusfaser-Gemischen

Eine Verarbeitungstechnologie mit feuchten mineralischen Zuschlagstoffen unterschiedlicher Feinheit und relativ grobteiligen Bambusfasern ist mit folgenden wesentlichen Verfahrensschritten und Verfahrensinhalten zu realisieren:
- Mengendosierung aller Zuschlagstoffkomponenten in einen Zwangsmischer bei gleichzeitiger Ermittlung der jeweiligen Wassergehalte;
- Vorteilhaft die gröbsten und feinsten Mineralbestandteile zusammen mit den Bambusfasern zuerst aufgeben, eine gewisse Vormischzeit, z.B. 1 Minute, abarbeiten und danach die mittleren Körnungen zuführen sowie erneut 1 -2 Minuten mischen.
- Anschließende Zugabe der pumpfähigen Bindemittelkomponente/n, z.B. in Gestalt von in den Mischer während des weiteren Mischprozesses eingesprühten Tropfen. Die Zeitdauer für das Fertigmischen wird sich als eine zu ermittelnde Funktion des Fasergehaltes und der sich einstellenden Gesamtfeuchte ergeben.
- Einstellung von Fasergehalten ≤ 45 Masse-% mit entsprechend dem Verwendungszweck variablen Anteilen von sehr feinen und groben Fasern. Die groben Fasern sollen den Festigkeitsaufbau bewirken, während die feinteiligen Fasern, bei Abmessungen entsprechend der Elementarbambusfaserzellen mit d_{Äqu.} ≤ 10 ∼20 µkm und I_{Faser} ≤ 2 mm, und nichtfasrige Bambusbestandteile die Fließeigenschaften der fertigen Mischung verbessern.
- Einstellung mittlerer Mineralanteile von ca. bis zu. 45 Masse-%, wobei vorzugsweise feinkörnige Bestandteile einzusetzen sind. Grobkörnige Mineralbestandteile sollten 25 % der gesamten Mineralmenge nicht überschreiten.

### Beispiel 2: Herstellung von Polymerbeton mit Bambusfasern zur stationären Fertigung beliebig geformter Formteile

Die variabel einzustellenden Faseranteile sind auf ≤ 45 Masse-% einzustellen, wobei bis zu 50 % der gesamten zugegebenen Fasermenge feinteilig sein soll, entsprechend der Abmessungen von Elementarbambusfaserzellen mit d_{Äqu.} ≤ 10 - 20 µm und I_{Faser} ≤ 2 mm und die mineralische Grobkornkomponente auf Werte zwischen 25 und 50 % des gesamten Mineralanteils eingestellt wird.

### Beispiel 3: Herstellung von Polymerbeton mit Bambusfaseranteilen zur Vorort-Herstellung von Schutzschichten und/oder Auskleidungen

Festigkeitsgebenden Schutzschichten und/oder Auskleidungen sollen mit Schalungshilfe eingebaut werden.- Hierbei sind ≥ 50 % des Faseranteils als lange und kräftigen Faserbündel mit d_{Äqu.} ≥ 0,5 - 1,0 mm und I_{Faser} ≥ 10 mm einzusetzen und die mineralische Grobkomkomponente soll ein Viertel des Mineralanteils nicht überschreiten.

## Patentansprüche

1. Verfahren zur Herstellung von Polymerbeton,
**dadurch gekennzeichnet, daß** wasserlösliche aber in Anwesenheit von Wasser aushärtende Reaktionsharze als Bindemittel und daß hochfeste organische Fasern aus nachwachsenden faserhaltigen Rohstoffen als biege- und/oder zugkraftübertragende Verstärkungen in einer Polymerbetonmatrix in mehreren Verfahrensschritten eingesetzt werden.

2. Verfahren nach Anspruch 1,
**dadurch gekennzeichnet, daß** beim Einsatz der organischen Fasern aus nachwachsenden faserhaltigen Rohstoffen, insbesondere Bambusfasern, gröbste und feinste mineralische Bestandteile zusammen mit den Fasern zuerst. aufgegeben, eine je nach Fasergehalt im Bereich von 30 Sekunden bis 5 Minuten zu variierende Vormischzeit abgearbeitet und danach die mittleren Körnungen der mineralischen Bestandteile zugeführt sowie erneut mit einer Nachmischzeit ≤ 3 Minuten gemischt werden, daß mit der Mengendosierung aller Zuschlagstoffkomponenten in einen an sich bekannten Zwangsmischer die gleichzeitige Ermittlung der jeweiligen Wassergehalte verbunden ist, daß anschließend die Zugabe der pumpfähigen Bindemittelkomponente/n, z. B. in Gestalt von in den Mischer während des weiteren Mischprozesses eingesprühten Tropfen erfolgt und daß die Zeitdauer für das Fertigmischen in Abhängigkeit des Fasergehaltes und der sich einstellenden Gesamtfeuchte im Bereich von ≤ 10 Minuten einzustellen ist

3. Verfahren nach Anspruch 1,
**dadurch gekennzeichnet, daß** die in Anwesenheit von Wasser aushärtenden Reaktionsharze beispielsweise als Polymersilikate, Polyvinylether oder Polyvinylpyrolidone in reiner oder modifizierter Form oder in handelsübliche Dispersionen mit unterschiedlicher Feinheit in Wasser vorgesehen sind.

4. Verfahren nach Anspruch 1,
**dadurch gekennzeichnet, daß** die hochfesten organischen Fasern aus nachwachsenden faserhaltigen Rohstoffen als vorzugsweise Bambusfasern ggf. mit mehr oder weniger grobfasrigen Bambusfaserpartikeln und mit Faserdurchmessern von d_{Faser} ≥ 0,5 mm und Faserlängen im Bereich von 4-6 mm ≤ I_{Faser} ≤ 50-60 mm vorgesehen sind.

5. Polymerbeton hergestellt gemäß der Ansprüche 1 bis 4 zur stationären Fertigung von beliebig geformten Formteilen,
**dadurch gekennzeichnet, daß** der Anteil der Fasern mit Abmessungen entsprechend der Elementarbambusfaserzellen mit dem Längen-Durchmesser-Verhältnis ≈ 100 bei d_{Äqu.} ≤ 10 - 20 µm und der Faserlänge I_{Faser} ≤ 2 mm mindestens 50 % der gesamten zugegebenen Fasermenge beträgt und daß die mineralische Grobkornkomponente auf Werte zwischen 25 und 50 % des Mineralanteils eingestellt ist.

6. Polymerbeton gemäß der Ansprüche 1 bis 4 zur Vorort-Herstellung von mit Schalungshilfe einzubauenden vor allem festigkeitsgebenden Schutzschichten und/oder Auskleidungen,
**dadurch gekennzeichnet, daß** mindestens 50 % des Faseranteils Fasern darstellen, die lange, kräftige Fasern bei d_{Äqu.} ≥ 0,5 -1,0 mm und I_{Faser} ≥ 10 mm sind und hierbei die mineralische Grobkornkomponente maximal ein Viertel des Mineralanteils nicht überschreitet.

## Claims

1. Process for the production of polymer concrete, **characterised in that** reaction resins that are water soluble but harden in the presence of water are used as binder and that high-strength organic fibres of secondary expanding fibre-containing raw materials are used as flexure-transmitting and/or tensile force-transmitting reinforcements in a polymer concrete matrix, in a plurality of process steps.

2. Process according to claim 1, **characterised in that** in the use of the organic fibres of secondary expanding fibre-containing raw materials, in particular bamboo fibres, very coarse and very fine mineral constituents are first of all taken together with the fibres, are worked for a premixing time varying in the range from 30 seconds to 5 minutes depending on the fibre content, following which the mineral constituents of mean grain size are added and the whole is mixed again for a post-mixing time of ≤ 3 minutes, that the respective water contents are determined at the same time as the quantitative metering of all additional components in a compulsory mixer known *per se*, that this is followed by the addition of the pumpable binder component(s), for example in the form of droplets sprayed into the mixer during the further mixing process, and that the duration of the mixing to form the finished product is adjusted in the region of ≤ 10 minutes depending on the fibre content and the resulting total moisture.

3. Process according to claim 1, **characterised in that** the reaction resins hardening in the presence of water are provided for example as polymer silicates, polyvinyl ethers or polyvinylpyrolidones in pure or modified form or in commercially available dispersions of variable fineness in water.

4. Process according to claim 1, **characterised in that** the high-strength organic fibres of secondary expanding fibre-containing raw materials are preferably provided as bamboo fibres, optionally with more or fewer coarse-fibre bamboo fibre particles and with fibre diameters of d_{fibre} ≥ 0.5 mm and fibre lengths in the range 4-6 mm ≤ l_{fibre} ≤ 50-60 mm.

5. Polymer concrete produced according to claims 1 to 4 for the stationary fabrication of arbitrarily shaped moulded parts, **characterised in that** the proportion of the fibres with dimensions corresponding to the elementary bamboo fibre cells with a length-diameter ratio ≈ 100 at d_{equiv}. ≤ 10-20 µm and fibre length l_{fibre} ≤ 2 mm is at least 50% of the total amount of added fibres, and that the amount of coarse grain mineral component is adjusted to values between 25 and 50% of the mineral fraction.

6. Polymer concrete according to claims 1 to 4 for the on-site production of protective layers and/or linings to be incorporated with the aid of shuttering and that in particular impart strength, **characterised in that** at least 50% of the fibre fraction is formed by fibres that are long, strong fibres with d_{equiv}. ≥ 0.5-1.0 mm and l_{fibre} ≥ 10 mm, and wherein the coarse grain mineral component does not exceed at most one quarter of the mineral fraction.

## Revendications

1. Procédé de préparation de béton polymère,
**caractérisé en ce que** des résines réactives solubles dans l'eau mais durcissant en présence d'eau sont employées comme liant et que des fibres organiques hautement résistantes de matières premières fibreuses renouvelables sont employées en plusieurs étapes de procédé comme renforts transmettant des forces de flexion et/ou de traction dans une matrice de béton polymère.

2. Procédé selon la revendication 1,
**caractérisé en ce que** lors de l'emploi de fibres organiques de matières premières fibreuses renouvelables, en particulier de fibres de bambou, des composants minéraux les plus grossiers et les plus fins sont tout d'abord déversés avec les fibres, il est procédé à une phase de pré-mélange variant dans une plage de 30 secondes à 5 minutes selon le taux de fibres, et ensuite les granularités intermédiaires des composants minéraux sont ajoutées ainsi qu'une nouvelle fois mélangées pendant une phase de mélange ultérieur ≤ 3 minutes, qu'au dosage quantitatif de l'ensemble des composants additifs dans un malaxeur à mélange forcé connu en soi est liée la détermination simultanée des teneurs en eau respectives, qu'ensuite s'opère, pendant la suite du processus de mélange, l'addition des composants liants pouvant être pompés, par exemple sous la forme de gouttes pulvérisées dans le malaxeur et que la durée du mélange final doit être réglée dans la plage ≤ 10 minutes en fonction du taux de fibres et de l'humidité totale qui s'établit.

3. Procédé selon la revendication 1,
**caractérisé en ce que** les résines réactives durcissant en présence d'eau sont prévues par exemple en tant que silicates polymères, polyvinyléther ou polyvinylpyrrolidone sous forme pure ou modifiée ou en dispersions courantes du commerce de finesse différente dans l'eau.

4. Procédé selon la revendication 1,
**caractérisé en ce que** les fibres organiques hautement résistantes provenant de matières premières fibreuses renouvelables sont prévues de préférence sous forme de fibres de bambou comportant le cas échéant plus ou moins de particules de fibres de bambou en fibres grossières et avec des diamètres de fibres de d_{fibres} ≥ 0,5 mm et des longueurs de fibres dans la plage de 4 à 6 mm ≤ l_{fibres} ≤ 50 à 60 mm.

5. Béton polymère préparé selon les revendications 1 à 4 pour la fabrication stationnaire de pièces moulées de forme quelconque,
**caractérisé en ce que** la fraction des fibres présentant des dimensions correspondant aux cellules fibreuses élémentaires de bambou d'un rapport longueur/diamètre ≈ 100 pour d_{équ.} ≤ 10 à 20 µm et la longueur de fibres l_{fibres} ≤ 2 mm est d'au moins 50 % de la quantité totale de fibres ajoutées et que le composant minéral grossier est réglé sur des valeurs comprises entre 25 et 50 % de la fraction minérale.

6. Béton polymère selon les revendications 1 à 4 pour la fabrication in situ principalement de couches de protection et/ou de revêtements conférant une résistance, à mettre en place à l'aide de coffrages,
**caractérisé en ce qu'**au moins 50 % de la fraction de fibres est représentée par des fibres qui sont des fibres longues résistantes de d_{équ.} ≥ 0,5 à 1,0 mm et l_{fibres} ≥ 10 mm et ce faisant les composants minéraux de granularités grossières n'excèdent pas au maximum un quart de la fraction minérale.
